Europäisches Patentamt

European Patent Office

Office européen des brevets

(19)

(11) **EP 1 512 557 A1**

(12) **EUROPEAN PATENT APPLICATION**
published in accordance with Art. 158(3) EPC

(43) Date of publication:
**09.03.2005 Bulletin 2005/10**

(21) Application number: **03728102.9**

(22) Date of filing: **19.05.2003**

(51) Int Cl.7: **B60C 19/00**, B60C 9/20,
B60C 9/00, B60C 11/00

(86) International application number:
**PCT/JP2003/006229**

(87) International publication number:
**WO 2003/099592 (04.12.2003 Gazette 2003/49)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.05.2002 JP 2002150660**
**24.05.2002 JP 2002150761**

(71) Applicant: **Bridgestone Corporation**
**Tokyo 104-8430 (JP)**

(72) Inventors:
• **KIKUCHI, Masami**
**c/o BRIDGESTONE CORP. Technical C.**
**Kodaira-shi, Tokyo 187-8531 (JP)**

• **AOIKE, Yukio**
**c/o BRIDGESTONE CORP. Technical C.**
**Kodaira-shi, Tokyo 187-8531 (JP)**
• **SHIZUKU, Takahisa**
**c/o BRIDGESTONE CORP. Tech. C.**
**Kodaira-shi, Tokyo 187-8531 (JP)**
• **ARAI, Toshiaki**
**c/o BRIDGESTONE CORP. Tech. C.**
**Kodaira-shi, Tokyo 187-8531 (JP)**

(74) Representative: **Whalley, Kevin**
**Marks & Clerk**
**90 Long Acre**
**London WC2E 9RA (GB)**

(54) **MAGNETIZED TIRE**

(57)    There is provided a magnetized tire provided with a magnetic force pattern having a peak capable of sufficiently detecting by a magnetic sensor arranged outside the tire by forming a part of wire filaments in a belt comprised of steel cords with a hard magnetic material or arranging a hard magnetic material in a tread portion to constitute the magnetized tire.

FIG. 1

EP 1 512 557 A1

## Description

TECHNICAL FIELD

This invention relates to a magnetized tire having a magnetic force pattern, and more particularly to a magnetized tire used in a system for controlling a vehicle in real time based on a tire deformation state obtained by detecting a magnetic filed from a magnetized tire through a magnetic sensor, a system of discriminating a vehicle to be mounted with a tire by reading information of a magnetic force pattern magnetized in the tire through a magnetic sensor.

BACKGROUND ART

It is proposed to control a vehicle based on information obtained by measuring a tire deformation state in real time, or to contribute the monitoring of this information to the safe running of the vehicle.

For example, it is examined to conduct the control of ABS (anti-skid brake system) based on the tire deformation state. That is, in order to enhance the performance of ABS used in the vehicle, it is effective to conduct the control of lock-unlock at a state that a friction coefficient of a road surface is made as large as possible. Since the friction coefficient of the road surface is related to a slip ratio of a wheel at a constant state of the road surface, ABS is designed so as to control the lock-unlock in the vicinity of the slip ratio corresponding to the maximum friction coefficient of the road surface. In the conventional ABS, it is common to be a system wherein a slip ratio is calculated based on the measured vehicle speed and wheel rotating speed and the braking is automatically controlled so as to put the slip ratio into a constant range. This system is effective in case that the road surface state is under a constant condition. However, since the state of actual road surface largely changes, there is a problem that an optimum friction coefficient of the road surface is not obtained from only the slip ratio. For this end, there is investigated a method wherein forces in circumferential direction and vertical direction from the road surface applied to the tire are measured and then a friction coefficient is directly determined from the measured forces. This method is that strains in directions subjected to application forces are measured and each of the application forces is determined from the measured strain values and a rigidity of a known tire.

Besides, as a method of measuring tire strain or deformation for utilizing to the control of the tire, there are investigated a system wherein strain in an axial direction of a tire applied from a road surface is measured and a friction coefficient of the road surface in the axial direction of the tire is determined from the measured value to control slippage in a lateral direction of a vehicle, a system wherein strain in a radial direction of a tire just beneath an axle is measured to detect a disorder of an internal pressure, and the like.

As the method of measuring the tire deformation in these systems, it is also examined to magnetically measure the tire deformation. That is, when a given portion of a tire, e.g. a tread portion thereof is previously magnetized by any means to form a given magnetic force pattern in a circumferential direction and a time change of a magnetic flux density in a magnetic filed induced by the magnetic force pattern with the rotation of the tire is detected by a magnetic sensor arranged on a non-rotating portion of a vehicle, since the magnetic force pattern changes accompanied with the deformation of the tire and the magnetic flux density detected by the magnetic sensor changes, the tire deformation can be known from the change of the magnetic flux density. In this method, therefore, it is important to form the stable magnetic force pattern in the tire with a high precision.

The tire magnetized with such a magnetic force pattern can be utilized to applications other than the above measurement of the tire deformation. For example, there is proposed a system in which information identifying a vehicle is coded on the magnetic force pattern of the tire and such a magnetic force pattern is read by a magnetic sensor to identify the vehicle. Even in this system, it is important that the stable magnetic force pattern is formed in the tire with a higher precision.

On the other hand, as the tire in which the magnetic force pattern is formed in a tread portion of the tire, there is known a tire wherein a belt made of steel cords is magnetized as described in JP-A-10-151918. This tire is used for calculating a vehicle speed required in a navigation system for self-navigating the vehicle. In this navigation system, the tire comprising a belt of steel cords magnetized with a given magnetic force pattern along a circumferential direction of the tire is mounted onto a vehicle and a magnetic field changed with the rotation of the tire is detected by a magnetic sensor to measure a rotating speed of the tire from the time change of the magnetic field detected to thereby calculate a vehicle speed.

However, even if the tire provided with only the magnetized steel cord belt could be used in the measurement of the rotating speed of the tire, it has been confirmed that for the purpose of measuring the deformation state of the tire in real time, since the steel cord is made of a soft magnetic material, the magnetization is weak and can not be developed sufficiently. That is, if it is intended to measure the deformation of the tire in real time at a shorter time interval, it is desirable to form a magnetic force pattern in a tread portion so as to make the number of magnetization peaks detected by the magnetic sensor as large as possible, but there is a problem that as the number of magnetization peaks increases, the spacing between the adjoining peaks approaches and the magnification of the peak becomes inevitably small and it is difficult to identify the peaks point by point.

Also, when the magnetized tire is used for the purpose of coding vehicle identification information, it is required to increase the number of coding bits for identifying many different vehicles. For this end, the spacing between magnetic poles should be made narrow and as a result, the magnetization peak becomes inevitably small. In this case, it is again difficult to detect the peaks of the magnetic pole and it is impossible to conduct the decoding of the identification information.

In view of the above problems, the invention is to provide a tire in which a spacing between peaks of the magnetic force pattern is made dense and a magnification of the peak can be sufficiently detected by a magnetic sensor.

DISCLOSURE OF THE INVENTION

The invention is made in order to achieve the above object, and the construction and functions thereof are mentioned below.

(1) The invention lies in a magnetized tire comprising a belt comprised of at least one belt layer of steel cords having a given magnetic force pattern, in which at least one wire filament constituting the steel cord is made of a hard magnetic material.

According to this magnetized tire, the belt is constituted with the belt layer made of the steel cords containing the wire filament made of a hard magnetic material such as ferrite, a rare earth magnet exemplified by neodymium-iron-boron, or the like, so that a magnetic force pattern having a narrow spacing between adjoining peaks and a sharp, high magnetization peak can be obtained by magnetizing such a steel cord. Therefore, when a magnetic field produced from the belt having such a magnetic force pattern is detected by the magnetic sensor, a peak of a magnetic flux density detected by the magnetic sensor becomes sharp and hence the identification of the peak can be surely conducted. Further, the degree of the deformation of the tire can be measured from the information relating such a peak, or the identification information coded in the tire can be decoded.

Moreover, the term "magnetic force pattern" used herein means that magnetic flux density of a magnetic field radiated from a surface of a magnetized objective in a component vertical to this surface is represented by a change along a given direction on the surface. Concretely, the magnetic sensor arranged near to the surface of the objective such as a gauss meter or the like is moved while controlling such a posture that a detecting direction catches magnetic force lines perpendicular to the surface of the objective, whereby a magnetic force pattern of the objective is obtained in which a magnitude of the magnetic flux density coming in the magnetic sensor is plotted in an ordinate and a position moved along a given direction is plotted in an abscissa.

(2) In the magnetized tire of the invention described in the item (1), the hard magnetic material is a ferrite magnet, a rare earth magnet or an alnico magnet.

According to this magnetized tire, since the hard magnetic material is the ferrite magnet, rare earth magnet or alnico magnet, the magnetic field to be detected by the magnetic sensor is made strong and also a high coercive force is given to the steel cord, whereby an influence of a magnetic field from an exterior in a radial direction upon the magnetic field detected by the magnetic sensor can be shut out.

(3) In the magnetized tire of the invention described in the item (1) or (2), the wire filament made of the hard magnetic material is spirally wound on an outer peripheral face of the steel cord.

According to this magnetized tire, the wire filament made of the hard magnetic material is arranged by winding around the outer peripheral face of the steel cord, so that magnetic force lines radiated from the wire filament of the hard magnetic material can be arrived at the magnetic sensor directing to an axle without magnetically shielding by a steel wire filament constituting the steel cord, and hence a magnetic force pattern having a high peak magnetization can be obtained.

(4) In the magnetized tire of the invention described in the item (1) or (2), the wire filament made of the hard magnetic material is arranged inside wire filaments constituting the outer peripheral face of the steel cord.

According to this magnetized tire, the wire filament of the hard magnetic material is arranged inside the wire filaments constituting the outer peripheral face of the steel cord, so that it is not required to form an adhesive layer for ensuring the adhesion of the wire filament of the hard magnetic material to rubber surrounding the steel cord and the conventional technique for the adhesion between steel cord and rubber can be utilized.

(5) In the magnetized tire of the invention described in any one of the items (1) to (4), the steel cord containing the wire filament made of the hard magnetic material is arranged at least in a radially innermost belt layer.

According to this magnetized tire, the steel cord containing the wire filament made of the hard magnetic material is arranged at least in a radially innermost belt layer, so that even when the belt is constituted with a plurality of belt layers, the magnetic field to be detected by the magnetic sensor arranged at the axle can be formed by radiating magnetic force lines inward in the radial direction of the tire.

(6) In the magnetized tire of the invention described in any one of the items (1) to (5), the tire provided with the belt is magnetized to form a magnetic force pattern.

In this magnetized tire, a tire is first formed at a non-magnetized state at a stage of arranging the hard magnetic material in the tire and then the finished tire is magnetized by using a magnetizer or the like to form a magnetic force pattern. Thus, the tire or the members therefor can be handled at a non-magnetized state till the completion of the tire vulcanization, so that it is not required to take a countermeasure on problems due to magnetism such as absorption of surrounding strong magnetic body in the course of the tire production, erasing of memory in the surrounding magnetic recording body and the like. In addition, since the magnetization is conducted after the completion of the tire, even if the tire is accidentally magnetized in the course of the production, the influence thereof can be erased, and hence the magnetic force pattern as is expected can be obtained accurately.

(7) The invention lies in a tire magnetized with a magnetic force pattern generating a magnetic field to be detected by a magnetic sensor attached to an axle at a posture of mounting onto an axle of a vehicle, in which a hard magnetic material forming the magnetic force pattern is arranged in a tread portion.

According to the magnetized tire of the invention, a hard magnetic material such as ferrite, a rare earth magnet exemplified by neodymium-iron-boron, or the like is arranged in the tread portion, so that a magnetic force pattern having a sharp, high magnetization peak even at a narrow spacing between adjoining peaks can be obtained by magnetizing the hard magnetic material. Therefore, when the magnetic flux density is continuously detected by the magnetic sensor attached to a non-rotating portion of the axle while rotating the tire comprising the tread portion having the above magnetic force pattern, a time change of the magnetic flux density having a sharp peak can be obtained, and as a result, the degree of the tire deformation can be measured from this time change as previously mentioned.

(8) In the magnetized tire of the invention described in the item (7), it comprises a belt made of steel cords and the hard magnetic material is arranged inside the belt in the radial direction.

It is common to use steel cords as a cord of a belt arranged in a tread portion of a tire, particularly a radial tire. In this case, if the hard magnetic material is arranged outside the belt comprised of steel cords in the radial direction, a greater part of magnetic force lines directing inward from the hard magnetic material in the radial direction form a magnetic path passing through the steel cord having a high permeability and hence the number of magnetic force lines capable of detecting by the magnetic sensor attached to the axle is largely reduced and it is impossible to obtain a time change of a magnetic flux density having a sharp peak by the magnetic sensor.

(9) In the magnetized tire of the invention described in the item (7) or (8), the hard magnetic material is a magnetic rubber obtained by mixing and dispersing magnetic powder in a rubber material.

According to this magnetized tire, the hard magnetic material is constituted with the magnetic rubber, so that it can deform in compliance with the large deformation of the tire as one of tire component members made of the rubber material, and hence the deformation of the tire is not obstructed and also the hard magnetic material itself is not subjected to damaging through the deformation of the tire.

(10) In the magnetized tire of the invention described in the item (9), a thin sheet of the magnetic rubber is arranged around a central axis of the tire in an annular form.

According to this magnetized tire, the thin sheet of the magnetic rubber is arranged in the tread portion in the annular form, so that the magnetic force pattern can be formed without largely changing a total thickness of the tread portion. Also, the magnetic rubber sheet can be adhered by winding as one of the tire component members in the building of a green tire before vulcanization, or can be adhered to an inner peripheral face of the tread portion of the tire after vulcanization, so that the magnetized tire can be easily produced.

(11) In the magnetized tire of the invention described in any one of the items (7) to (10), the tire provided with the hard magnetic material is magnetized to form a magnetic force pattern.

In this magnetized tire, a tire is first formed at a non-magnetized state at a stage of arranging the hard magnetic material in the tire and then the finished tire is magnetized by using a magnetizer or the like to form a magnetic force pattern. Thus, the tire or the members therefor can be handled at a non-magnetized state till the completion of the tire vulcanization, so that it is not required to take a countermeasure on problems due to magnetism such as absorption of surrounding strong magnetic body in the course of the tire production, erasing of memory in the surrounding magnetic recording body and the like. In addition, since the magnetization is conducted after the completion of the tire, even if the tire is accidentally magnetized in the course of the production, the influence thereof can be erased, and hence the magnetic force pattern as is expected can be obtained accurately.

(12) In the magnetized tire of the invention described in any one of the items (1) to (11), the magnetic force pattern is formed along the circumferential direction.

According to this magnetized tire, the magnetic force pattern is formed along the circumferential direction, so that many magnetization peaks can be formed in this direction. Since the peak of the magnetic flux density detected by the magnetic sensor appears at a shorter time interval, the deformation of the tire calculated from information based on the peak can be caught at a shorter time interval in real time, and hence if it is intended to use in the braking control of the vehicle, the control can be conducted at a faster response.

(13) In the magnetized tire of the invention described in the item (12), the magnetic force pattern is formed by alternately arranging magnetic poles having different polarities in the circumferential direction.

According to this magnetized tire, the direction of the magnetic force lines from the magnetic pole in the magnetic force pattern is formed in a plane parallel to an equatorial plane of the tire, so that the adjoining magnetic poles having different polarities can be arranged opposite to each other in this plane at a given inclination angle. By properly selecting the inclination angle in accordance with the position of the magnetic sensor in the radial direction, the detecting ability of the magnetic sensor can be ensured by adjusting the magnetic flux density in the vicinity of the magnetic sensor irrespectively of the attaching position in the radial direction.

(14) In the magnetized tire of the invention described in the item (12), magnetic poles having different polarities are arranged opposite to each other in the widthwise direction to form a magnetic force pattern so that the intensity of the magnetic pole is changed in the circumferential direction and the distribution of absolute values of the magnetic poles is symmetrical with respect to an equatorial plane of the tire.

According to this magnetized tire, both the magnetic poles are arranged opposite to each other in the widthwise direction, so that when the distance between both the magnetic poles in the widthwise direction is widened, the magnetic force lines directing inward in the radial direction oft he tire can be formed so as to expand in the vicinity of the center of the tire and can be detected in a sufficient sensitivity by the magnetic sensor attached to the axle. Further, the magnetic force pattern is formed so that the absolute values of the intensities of the magnetic poles changing along the circumferential direction or the distribution of the intensities of the magnetic poles ignoring the polarity are symmetrical with respect to the equatorial plane, so that the existing direction of the magnetic force lines can be accurately formed in a meridional plane of the tire, and if the magnetic sensor is attached so as to detect the number of the magnetic force lines in the meridional direction, the number of the magnetic force lines detected by the magnetic sensor in the rotation of the tire devotedly shows the change of the magnetic force pattern formed in the circumferential direction of the tire. Even if magnetization peaks are formed at fine pitches in the circumferential direction of the tread portion, they can be detected as a change of magnetic flux density in a sufficient sensitivity.

## BRIEF DESCRIPTION OF THE DRAWINGS

FIG. 1 is a section view of a magnetized tire according to a first embodiment of the invention.
FIG. 2 is a perspective view and section view of a steel cord.
FIG. 3 is a developed view showing an arrangement of magnetic poles in a belt.
FIG. 4 is a chart showing a magnetic force pattern of a belt.
FIG. 5 is a view showing an arrangement of magnetic poles and a magnetic sensor.
FIG. 6 is a graph showing a time change of magnetic flux density detected by a magnetic sensor.
FIG. 7 is a developed view showing an arrangement of magnetic poles in a belt.
FIG. 8 is a chart showing a magnetic force pattern of a belt.
FIG. 9 is a view showing an arrangement of magnetic poles and a magnetic sensor.
FIG. 10 is a section view of a magnetized tire according to a second embodiment of the invention.
FIG. 11 is a developed view showing an arrangement of magnetic poles developing a magnetic rubber layer into a plane viewed from an inner face of the tire.

## BEST MODE FOR CARRYING OUT THE INVENTION

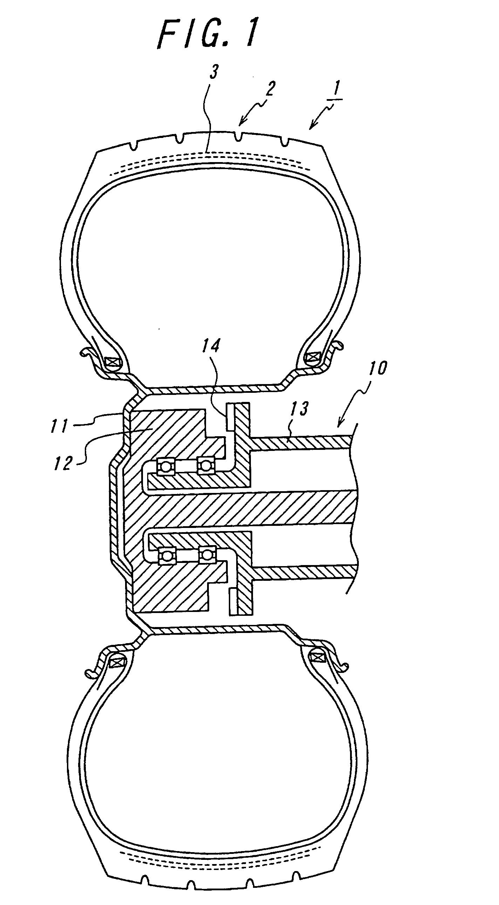

A first embodiment of the invention will be described with reference to FIGS. 1-9.
In FIG. 1 is shown a section view of a magnetized tire 1 of this embodiment at a posture of mounting on a rim 11. In a tread portion 2 of the tire 1 is arranged a belt 3 comprised of two steel cord belt layers going round the tire 1. The rim 11 mounted with the tire 1 is fixed to a hub 12 constituting a rotating portion of an axle 10 of a vehicle and the hub 12 is born by an axle case 13 constituting a non-rotating portion of the axle 10, while magnetic sensors 14 constituted with a MI sensor (magnetic impedance sensor) or the like are connected and fixed to the axle case 13.

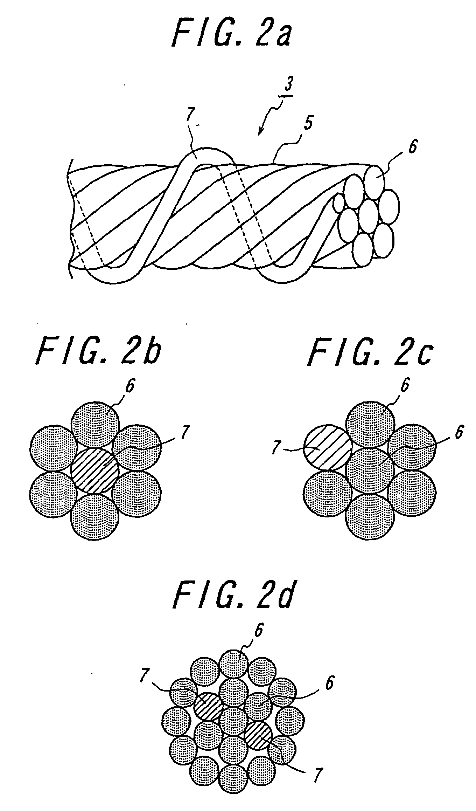

FIG. 2a is a perspective view of a steel cord 5 constituting each belt layer of the belt 3. The steel cord 5 is constituted by twisting seven steel wire filaments 6 and spirally winding one wire filament 7 made of a hard magnetic material therearound, so that the steel cord 5 can have a high residual magnetization.

As the steel cord used in this embodiment, structures shown by section views in FIGS. 2b-2d can be used in addition to the cord shown in FIG. 2a. The cords shown in FIGS. 2b and 2c have a structure of twisting seven filaments wherein a core wire filament or one of sheath wire filaments is a wire filament 7 of a hard magnetic material and the remaining wire filaments are steel wire filaments 6, and the cord shown in FIG. 2d has a structure of twisting nineteen filaments wherein two wire filaments among the wire filaments constituting a layer at an inside of an outermost layer and adjacent thereto are wire filaments 7 of a hard magnetic material and the remaining wire filaments are steel wire filaments 6.

In the belt 3 containing steel cords 5 shown in FIG. 2a or 2c, the wire filament 7 of the hard magnetic material is directly arranged on the outer peripheral surface of the steel cord 5, so that magnetic force lines radiated from the wire filament 7 of the hard magnetic material can develop a strong magnetic force pattern without magnetically shielding by the other steel wire filaments 6. While, in the belt 3 containing steel cords 5 shown in FIG. 2b or 2d, the wire filament 7 of the hard magnetic material is not arranged so as to directly expose to the outer peripheral surface of the steel cord 5, so that the conventionally established adhesion technique can be used in the adhesion of steel cord to rubber and potential problems due to the poor adhesion can be avoided.

In the formation of the steel cord 5, the wire filament 7 of the hard magnetic material is previously wound around some bobbins among the wire filament wound bobbins at a stage of twisting the wire filaments to form a cord, and then the wire filaments 6, 7 are wound off from the respective bobbins and twisted by the conventional twisting machine, whereby the steel cord 5 can be formed. At a stage of building a green tire, belt layers each containing the steel cord 5 are attached to form a belt 3 and then the resulting green tire is vulcanized and a magnetizing device or the like is pushed onto an inner peripheral face of a portion of the vulcanized tire corresponding to the belt 3 while moving in a given order, whereby there can be obtained a magnetized tire 1 having a given magnetic force pattern. Also, as the hard magnetic material used in the wire filament 7, it is properly selected and used from ferrite, a rare earth magnet material such as neodymium-iron-boron, samarium-cobalt or the like, an alnico magnet material and so on considering workability and the like.

The belt 3 comprised of the above constituted steel cords 5 can give a magnetic force pattern having a high magnetization peak, which can not be attained in a tire using a belt constituted by merely magnetizing steel cords made of a soft magnetic material, to the magnetized tire 1.

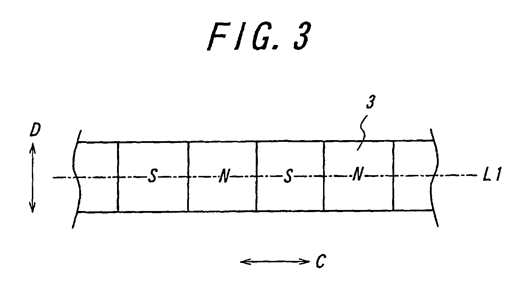

FIG. 3 is a developed view illustrating an arrangement of magnetic poles by developing the belt 3 viewed from an inner face of the tire into a plane. In this case, a direction shown by an arrow D is a widthwise direction of the tire, and a direction shown by an arrow C is a circumferential direction of the tire, and N and S show peak positions of magnetic poles. In the embodiment of FIG. 3, the magnetic poles are arranged so as to have a uniform magnetization in the widthwise direction of the tire and reverse a polarity at a given pitch in the circumferential direction of the tire.

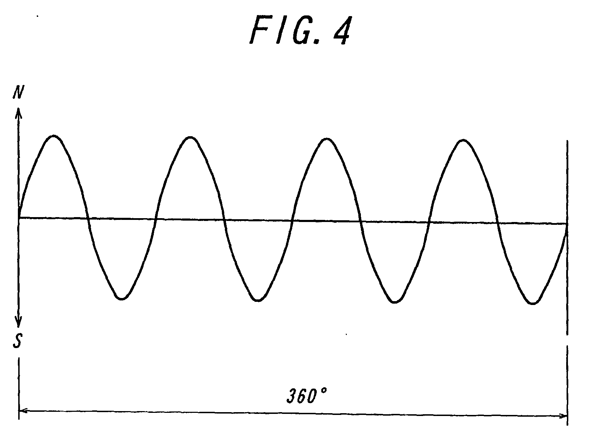

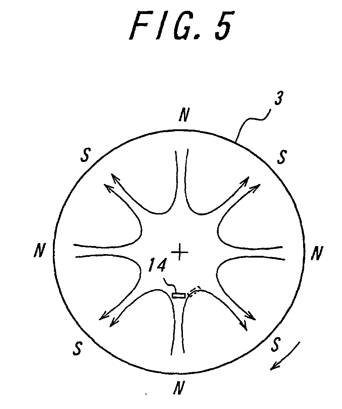

FIG. 4 is a chart indicating a magnetic force pattern along a straight line L1 shown in FIG. 3. This magnetic force pattern has four N poles and four S poles over the circumference of the tire, respectively. FIG. 5 is an arrangement view of magnetic force lines coming in and out to each pole on the belt 3 and a magnetic sensor 14 detecting them viewing from an axial direction of the tire. The magnetic sensor 14 is arranged just beneath an axle so as to detect a change of a magnetic field from a tread portion 2 located just beneath the axle.

The magnetic force lines extend in parallel to an equatorial plane of the tire 1 and also the magnetic sensor 14 is arranged at a posture of detecting the magnetic force lines in this direction, so that when the magnetized tire 1 is rotated, the magnetic flux density detected by the magnetic sensor 14 is smallest at such a rotating position of the magnetized tire 1 that the magnetic poles and the magnetic sensor 14 are positioned in the same radial line, while the magnetic flux density is largest at such a rotating position of the magnetized tire 1 that a middle point between adjoining poles and the magnetic sensor 14 are positioned in the same radial line.

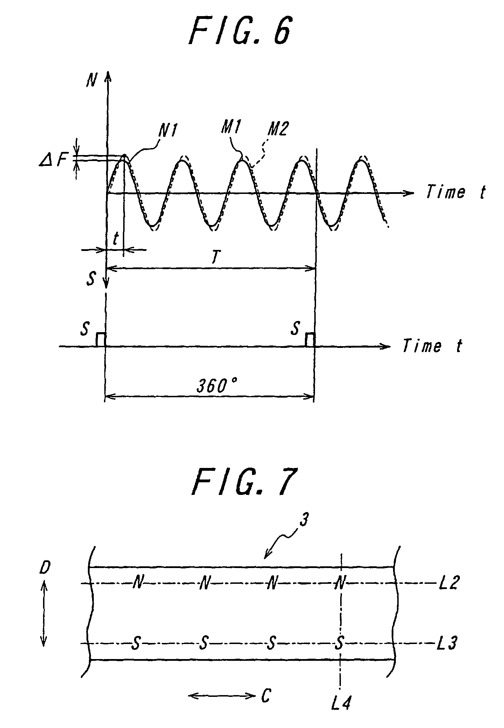

FIG. 6 is a graph showing a time change of the magnetic flux density detected by the magnetic sensor 14. A curve M1 shows a change of the magnetic flux density when external force in both vertical direction and circumferential direction is not applied to the magnetized tire 1, and a curve M2 shows a change of the magnetic flux density when external force is applied to the magnetized tire 1. In FIG. 6 is also shown a pulse S sent out when one place of the rotating portion of the axle on the circumference passes through a given position of a non-rotating portion of the axle during the rotation of the magnetized tire 1 together with an axis of a time. In this case, a timing of generating the pulse S is a starting point of phase every the rotation of the tire.

During one rotation of the tire, peaks of the magnetic flux density detected by the magnetic sensor 14 appear four by four in correspondence to the number of N poles and S poles of the belt 3, respectively. When a load is applied to the tire, a tire height is made small just beneath the axis of the tire, so that a distance between the magnetic sensor 14 and the magnetic pole beneath the axis of the tire becomes short, and hence the magnetic flux density detected becomes large and a magnitude of a peak N1 of the magnetic flux density is larger by $\Delta F$ as shown by the curve M2 than that of the curve M1 indicating the magnetic flux density when a vertical load is not applied to the tire. If a relationship between the vertical load and ΔF is previously prepared, the vertical load can be determined by calculating back from the found ΔF.

On the other hand, when a friction force is applied to the magnetized tire 1, distortion is caused between the tread portion and an axis center of the tire 1, and hence the tread portion 2 rotates while delaying the phase from the axis center by such a distortion deformation quantity. When a distortion angle of the tread portion 2 with respect to the axis center is θ, the peak N1 appears in the curve M2 behind a time corresponding to the angle θ with respect to that on the curve M1. When a time from the detection of the pulse S as a starting point of phase to the detection of the peak N1 is t and a time between adjoining pulses S is T and a difference between the rotating position of the tire 1 generating the peak N1 of the magnetic flux density and the starting point of phase is Θ, the angle θ can be measured by a proportional calculation of an equation (1). Also, if the relationship between a magnitude of friction force and θ is previously measured, θ can be measured by a back calculation using the equation (1) from the found t and T and a known Θ.

$$\theta = (t/T) \times 360 - \Theta \qquad (1)$$

Although the method of measuring vertical force and friction force applied to the magnetized tire 1 is described with respect to the case of arranging the magnetic poles on the belt 3 as shown in FIG. 3, the arrangement of the magnetic poles on the belt 3 is not limited to the above case, the another embodiment of the magnetic pole arrangement is shown as follows. FIG. 7 is a developed view of a magnetized belt 3 by developing it viewed from an inner face of the tire into a plane. In this case, a direction shown by an arrow D is a widthwise direction of the tire, and a direction shown by an arrow C is a circumferential direction of the tire, and N and S show peak positions of magnetic poles. In this magnetized tire 1, N poles are arranged in one side of the widthwise direction and S poles are arranged in the other side thereof, while intensities of these magnetic poles are changed in the circumferential direction and the changes are synchronized with each other.

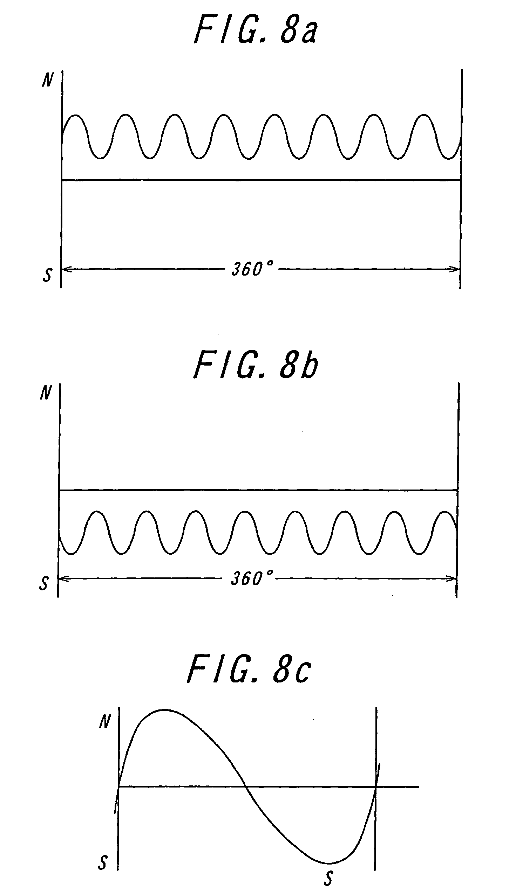

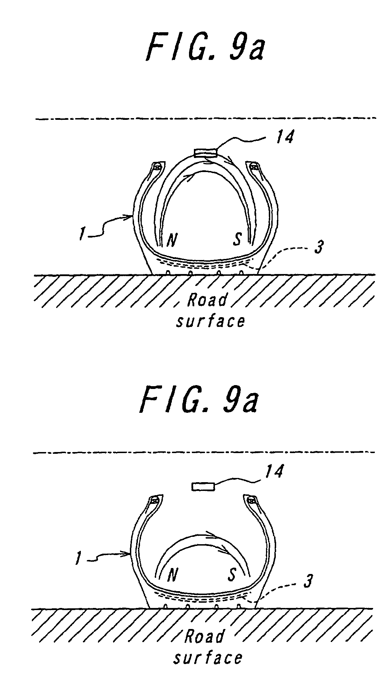

FIG. 8a, FIG. 8b and FIG. 8c are charts of magnetic force patterns along straight lines L2, L3 and L4 of FIG. 7, respectively. Also, FIG. 9a and FIG. 9b are views of arranging magnetic force lines generated from the magnetic poles on the belt 3 and a magnetic sensor 14 detecting them in view of a meridional section of the tire, respectively, in which FIG. 9a shows a state of positioning peaks of the magnetic poles on the belt 3 just beneath the axle and FIG. 9b shows a state of positioning valleys of the magnetic poles just beneath the axle. Furthermore, the magnetic sensor 14 is arranged just beneath the axle so as to detect the change of the magnetic field from the tread portion 2 just beneath the axle.

As shown in FIGS 9a and 9b, the magnetic force lines extend in parallel to meridional plane of the magnetized tire 1 and the magnetic sensor 14 is arranged at a posture of detecting the magnetic force lines in this direction, so that when the magnetized tire 1 is rotated, the magnetic flux density detected by the magnetic sensor 14 becomes largest at such a rotating position of the magnetized tire 1 that the magnetic poles and the magnetic sensor 14 are positioned in the same radial line, while the magnetic flux density becomes smallest at such a rotating position of the magnetized tire 1 that the valley between the magnetic poles and the magnetic sensor 14 are positioned in the same radial line.

The explanation on the method of measuring forces applied to the tire 1 by using the above arranged magnetized tire 1 and magnetic sensor 14 is the same as in the case of the magnetic pole arrangement shown in FIG. 3, and is omitted here.

As an application example of the magnetized tire 1 is explained an example of detecting the magnetic field from the magnetized tire 1 by the magnetic sensor 14 to specify the degree of tire deformation based on the detected results. As another application example, there is proposed a system that a given number of points of the tire arranged apart from each other at a given pitch in the circumferential direction thereof are magnetized or not magnetized at a stage of magnetizing the tire to form a magnetic force pattern coding a vehicle self-identification number of a vehicle to be mounted with this tire, and when the tire is rotated on a flat plate provided with magnetic sensors arranged in correspondence with the above given number during the running of the vehicle, the magnetic sensors detect the presence or absence of magnetization of bits corresponding to the magnetic force pattern of the tire to decode the vehicle self-identification number coded in the tire.

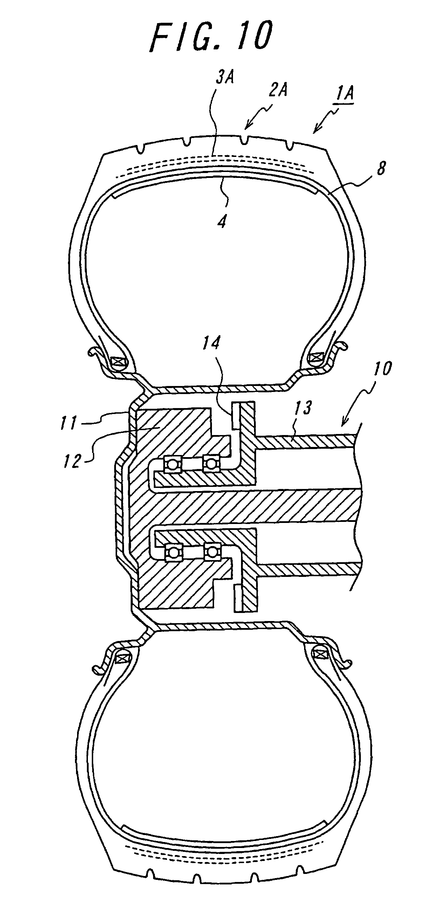

Next, a second embodiment of the invention is described with reference to FIG. 10. FIG. 10 is a section view illustrating a posture of mounting a magnetized tire 1A of this embodiment onto a rim 11. Moreover, the same parts in FIG. 10 as in the first embodiment are designated by the same reference symbols. In a tread portion 2A of the tire 1A are provided a belt 3A of steel cords arranged over the circumference of the tire 1A and a magnetic rubber layer 4 arranged at an inside of an innerliner 8 in the radial direction and over an inner circumferential face of the tire. The rim 11 mounted with the tire 1A is fixed to a hub 12 constituting a rotating portion of an axle 10 of the vehicle, and the hub 12 is born by an axle case 13 constituting a non-rotating portion of the axle 10, while magnetic sensors 14 constituted with a MI sensor (magnetic impedance sensor) or the like are connected and fixed to the axle case 13.

In the formation of the magnetized tire 1A having the magnetic rubber layer 4, magnetic powder of a hard magnetic material is mixed with and dispersed in a compounding rubber, which is extruded into a sheet, and then the sheet is wound around a tire building drum alone or the sheet is previously preset to a rubber sheet of the innerliner 8 and the preset rubber sheet of the innerliner 8 is wound around the tire building drum to form a green tire, which is then vulcanized to form a tire. Thereafter, the tire is magnetized by directly contacting or approaching magnetic poles of a magnetizing device onto the magnetic rubber layer 4 located in the inner peripheral face of the tire at given positions to thereby complete the magnetized tire 1. Moreover, it is important that orientation of the magnetic powder is aligned in a given direction in the extrusion for forming a pattern having a high magnetization peak.

In the above method, the magnetic rubber layer 4 is attached at a stage of building the green tire. Alternatively, it is possible to attach this layer to the inside of the innerliner 8 located in the inner peripheral face of the tire in the radial direction through an adhesive or the like after the completion of the vulcanized tire. The method of arranging the magnetic rubber layer 4 after the completion of the vulcanized tire is advantageous in case of forming the magnetic force pattern in the conventional tire later.

As the magnetic powder compounded in the magnetic rubber layer 4 is used a hard magnetic material such as ferrite, a rare earth magnet such as neodymium-iron-boron, samarium-cobalt or the like, an alnico magnet and so on. Thus, the magnetic force pattern having a high magnetization peak, which can not attained in the magnetized tire having a belt comprised of only steel cords as a soft magnetic material, can be given to the magnetized tire 1A.

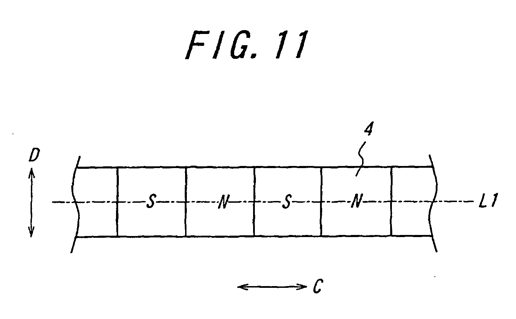

FIG. 11 is a developed view illustrating an arrangement of magnetic poles by developing the magnetic rubber layer 4 viewed from an inner face of the tire into a plane. In this case, a direction shown by an arrow D is a widthwise direction of the tire, and a direction shown by an arrow C is a circumferential direction of the tire, and N and S show peak positions of magnetic poles. In the embodiment of FIG. 11, the magnetic poles are arranged so as to have a uniform magnetization in the widthwise direction of the tire and reverse a polarity at a given pitch in the circumferential direction of the tire. As shown in FIG. 11, the magnetic pole arrangement of the second embodiment is the same as the magnetic pole arrangement of the first embodiment though the substance constituting the magnetic pole differs between both the embodiments, and hence the same magnetic force pattern and magnetic filed as in the first embodiment are formed even in the second embodiment and also the method of detecting the magnetic field and the method of measuring the deformation of the tire from the time change of the magnetic field detected are the same as described in the first embodiment. The detailed explanation thereto is omitted here.

As seen from the above example of arranging the magnetic poles magnetized in the magnetic rubber layer 4 and the magnetic sensor 14, when the tire 1A has the belt 3A comprised of steel cords, it is important that the magnetic rubber layer 4 is arranged at the inside of the belt 3A in the radial direction. Because, if the layer is arranged at the outside of the belt 3A in the radial direction, the bulk of the magnetic force lines generated from the magnetic rubber layer 4 form a magnetic path passing through the steel cords, and hence the level of the magnetic flux density at the position of the magnetic sensor 14 arranged inside the rim 11 in the radial direction becomes very small.

Moreover, it is possible to arrange the magnetic rubber layer between other tire component members in the interior of the tire in addition to the above embodiment instead of the arrangement on the surface of the tire, or further it is possible to attach small pieces of a magnet sintered body or a plastic bond magnet to the surface o f the tire and magnetize them instead of the magnetic rubber layer.

INDUSTRIAL APPLICABILITY

As seen from the above, according to the invention, a part of the wire filaments constituting the steel cord for the belt is made of a hard magnetic material, or a hard magnetic material is arranged on the tread portion to constitute a magnetized tire, so that the magnetic force pattern having a peak capable of sufficiently detecting by a magnetic sensor arranged outside the tire can be provided onto this tire.

**Claims**

1. A magnetized tire comprising a belt comprised of at least one belt layer of steel cords and having a given magnetic force pattern, in which at least one wire filament constituting the steel cord is made of a hard magnetic material.

2. A magnetized tire according to claim 1, wherein the hard magnetic material is a ferrite magnet, a rare earth magnet or an alnico magnet.

3. A magnetized tire according to claim 1 or 2, wherein the wire filament made of the hard magnetic material is spirally wound on an outer peripheral face of the steel cord.

4. A magnetized tire according to claim 1 or 2, wherein the wire filament made of the hard magnetic material is arranged inside wire filaments constituting the outer peripheral face of the steel cord.

5. A magnetized tire according to any one of claims 1 to 4, wherein the steel cord containing the wire filament made of the hard magnetic material is arranged at least in a radially innermost belt layer.

**6.** A magnetized tire according to any one of claims 1 to 5, wherein the tire provided with the belt is magnetized to form a magnetic force pattern.

**7.** A magnetized tire magnetized with a magnetic force pattern generating a magnetic field to be detected by a magnetic sensor attached to an axle at a posture of mounting onto an axle of a vehicle, in which a hard magnetic material forming the magnetic force pattern is arranged in a tread portion.

**8.** A magnetized tire according to claim 7, wherein the tire comprises a belt made of steel cords and the hard magnetic material is arranged inside the belt in the radial direction.

**9.** A magnetized tire according to claim 7 or 8, wherein the hard magnetic material is a magnetic rubber obtained by mixing and dispersing magnetic powder in a rubber material.

**10.** A magnetized tire according to claim 9, wherein a thin sheet of the magnetic rubber is arranged around a central axis of the tire in an annular form.

**11.** A magnetized tire according to any one of claims 7 to 10, wherein the tire provided with the hard magnetic material is magnetized to form a magnetic force pattern.

**12.** A magnetized tire according to any one of claims 1 to 11, wherein the magnetic force pattern is formed along the circumferential direction.

**13.** A magnetized tire according to claim 12, wherein the magnetic force pattern is formed by alternately arranging magnetic poles having different polarities in the circumferential direction.

**14.** A magnetized tire according to claim 12, wherein magnetic poles having different polarities are arranged opposite to each other in the widthwise direction to form a magnetic force pattern so that the intensity of the magnetic pole is changed in the circumferential direction and the distribution of absolute values of the magnetic poles is symmetrical with respect to an equatorial plane of the tire.

# F I G. 1

# FIG. 2a

# FIG. 2b

# FIG. 2c

# FIG. 2d

# FIG. 3

# FIG. 4

N

S

360°

EP 1 512 557 A1

# FIG. 5

# FIG. 6

# FIG. 7

## FIG. 8a

## FIG. 8b

## FIG. 8c

# FIG. 9a

# FIG. 9a

# FIG. 10

# FIG. 11

## INTERNATIONAL SEARCH REPORT

| International application No. |
|---|
| PCT/JP03/06229 |

| A. CLASSIFICATION OF SUBJECT MATTER |
|---|
| Int.Cl⁷ B60C19/00, 9/20, 9/00, 11/00 |

According to International Patent Classification (IPC) or to both national classification and IPC

| B. FIELDS SEARCHED |
|---|
| Minimum documentation searched (classification system followed by classification symbols) |
| Int.Cl⁷ B60C19/00, 9/20, 9/00, 11/00, D07B1/06 |

Documentation searched other than minimum documentation to the extent that such documents are included in the fields searched
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
|---|---|---|
| Y | JP 62-27616 A (NEC Corp.),<br>05 February, 1987 (05.02.87),<br>Full text; Figs. 1 to 6<br>(Family: none) | 7,9 |
| Y | Microfilm of the specification and drawings annexed to the request of Japanese Utility Model Application No. 169025/1986(Laid-open No. 074303/1988) (TDK Corp.),<br>18 May, 1988 (18.05.88),<br>Full text; Figs. 1 to 3<br>(Family: none) | 7,9 |
| A | EP 833162 A2 (CANON DENSHI KABUSHIKI KAISHA),<br>01 April, 1998 (01.04.98),<br>& JP 10-151918 A | 1-6,12-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 August, 2003 (08.08.03) | 19 August, 2003 (19.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 512 557 A1**

## INTERNATIONAL SEARCH REPORT

International application No.

PCT/JP03/06229

C (Continuation). DOCUMENTS CONSIDERED TO BE RELEVANT

| Category* | Citation of document, with indication, where appropriate, of the relevant passages | Relevant to claim No. |
|---|---|---|
| A | EP 1002669 A1 (PIRELLI PNEUMATICI Socleta per Azioni), 24 May, 2000 (24.05.00), & JP 11-342711 A | 8,10-14 |

**EP 1 512 557 A1**

## INTERNATIONAL SEARCH REPORT

| International application No. |
|---|
| PCT/JP03/06229 |

**Box I   Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:

Claims 1-6 and Claims 12-14 relate to a tire composed of at least one belt layer made of steel cord with a belt having a predetermined magnetic force pattern, and particularly to a magnetized tire wherein at least one of the strands constituting the steel cord is made of rigid magnetic material.

Claims 7-11 relate to a tire magnetized with a magnetic force pattern producing a magnetic field to be detected by a magnetic sensor attached to the axle of a vehicle when the tire is in the axle-mounted posture, particularly to a magnetized tire wherein a rigid magnetic material forming a magnetic pattern is disposed in the tread.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.

☒   No protest accompanied the payment of additional search fees.

Form PCT/ISA/210 (continuation of first sheet (1)) (July 1998)

22